# EUROPÄISCHE PATENTSCHRIFT

(11) **EP 1 506 473 B1**
(45) Veröffentlichungstag und Bekanntmachung des Hinweises auf die Patenterteilung: **17.07.2013**
(21) Anmeldenummer: 03735380.2
(22) Anmeldetag: 13.05.2003
(51) Int. Cl.: G06F 7/72

(54) **AUSSPÄHUNGSGESCHÜTZTE MODULARE INVERSION**
MODULAR INVERSION THAT IS PROTECTED AGAINST ESPIONAGE
INVERSION MODULAIRE PROTEGEE CONTRE LES TENTATIVES D'ESPIONNAGE

(30) Priorität: 16.05.2002 DE 10222212
(43) Veröffentlichungstag der Anmeldung: 16.02.2005
(73) Patentinhaber: Giesecke & Devrient GmbH, 81677 München (DE)
(72) Erfinder: BAUER, Sven, 81543 München (DE)
(86) Internationale Anmeldenummer: PCT/EP2003/005011
(87) Internationale Veröffentlichungsnummer: WO 2003/098429

(56) Entgegenhaltungen:
- WO-A-00/42733
- WO-A-01/31436
- US-A- 4 405 829
- US-A1- 2001 002 486
- M.-L. AKKAR, C. GIRAUD: "An Implementation of DES and AES, Secure against Some Attacks", CHES 2001, LNCS 2162, 2001, pages 309-318, XP008002641, Berlin

## Beschreibung

Die Erfindung betrifft allgemein das technische Gebiet der Kryptographie und spezieller eine für kryptographische Zwecke vorgesehene Technik zur modularen Inversion. Insbesondere ist die Erfindung zum Einsatz in tragbaren Datenträgern vorgesehen, die z.B. als Chipkarten in unterschiedlichen Bauformen oder als Chipmodule ausgestaltet sein können.

Auf dem Gebiet der Kryptographie werden Verfahren zur modularen Inversion beispielsweise bei der Erzeugung eines Schlüsselpaars für das in dem US-Patent 4,405,829 beschriebene RSA-Codier- oder Signaturverfahren eingesetzt Das RSA-Verfahren verwendet einen öffentlichen Schlüssel (*e, m*) und einen geheimen privaten Schlüssel *d*, wobei der Wert *m* das Produkt zweier großer Primzahlen *p* und *q* ist. Zur Schlüsselpaarberechnung werden zunächst die Werte *p, q* und *e* festgelegt. Der private Schlüssel *d* wird dann als das modulare Inverse von e zum Modul (*p* - 1)(*q* - 1) berechnet. Dies heißt, daß die Zahl *d* die Gleichung 1= *ed* mod (*p* -1)(*q* -1) erfüllt Bei der Berechnung müssen der private Schlüssel d und der Modul (*p* -1)(*q* -1) geheim bleiben.

Allgemein ist zu zwei gegebenen ganzen Zahlen *a* und *n* das modulare Inverse von *a* zum Modul *n* definiert als diejenige Zahl *b*, für die 0 ≤ *b* < *n* und 1 = *ab* mod *n* gilt. Eine solche Zahl *b* existiert, wenn *a* und *n* teileifremd sind. Algorithmen zur Berechnung des modularen Inversen eines vorgegebenen Wertes *a* zu einem vorgegebenen Modul *n* sind als solche bekannt So ist beispielsweise der erweiterte Euklidische Algorithmus auf den Seiten 325 bis 327 des Buches von Donald E. Knuth, "The Art of Computer Programming", Band 2, 2. Auflage, Addison-Wesley, 1981, beschrieben. Eine insbesondere im Zusammenhang mit Binärzahlen vorteilhafte Abwandlung des erweiterten Euklidischen Algorithmus ist das Verfahren von Stein, das auf den Seiten 321 bis 324 des genannten Buches in Verbindung mit Aufgabe 35 auf Seite 339 und der Lösung dazu auf Seite 606 beschrieben ist

Bei beiden genannten Verfahren besteht jedoch das Problem, daß bei einer direkten Implementierung des Algorithmus als Programm der abgearbeitete Programmcode und damit auch physische Parameter wie Laufzeit oder Stromverbrauch hochgradig von den Eingabedaten abhängen. Es können daher durch Analyse der Stromverbrauchskurve, der Programmlaufzeit oder anderer Meßwerte Rückschlüsse auf die Eingabewerte *a* und *n* gezogen werden. Beispiele für diese und andere Angriffsmöglichkeiten im Zusammenhang mit tragbaren Datenträgern sind in Abschnitt 8.2.4.1 (Seiten 482 bis 499) des Buches "Handbuch der Chipkarten" von W. Rankl und W. Effing, 3. Auflage, Hanser, 1999 beschrieben. Es ist zu vermuten, daß entsprechende Angriffsmöglichkeiten auch bei anderen als den oben beispielhaft beschriebenen Verfahren zur modularen Inversion möglich sind.

Wenn mindestens einer der Eingabewerte *a* oder *n* geheimgehalten werden muß, so stellen Angriffsmöglichkeiten wie die oben genannten ein Sicherheitsrisiko dar. So besteht bei dem bereits beschriebenen Beispiel der Schlüsselpaarerzeugung für das RSA-Verfahren die Gefahr, daß ein Angreifer bei der Berechnung des modularen Inversen von e zum Modul (*p* - 1)(*q* - 1) entweder der geheimzuhaltende Modul (*p* - 1)(*q* - 1) oder unmittelbar das Berechnungsergebnis, nämlich den privaten Schlüssel *d*, ausspäht.

Besonders kritisch sind die genannten Sicherheitsprobleme dann, wenn das Verfahren zur modularen Inversion von einem Prozessor eines tragbaren Datenträgers, beispielsweise einer Chipkarte (*smart card*) oder eines Chipmoduls, ausgeführt wird. Ein erster Grund dafür ist, daß solche tragbaren Datenträger oft für sicherheitskritische Anwendungen verwendet werden, z.B. im Zusammenhang mit Finanztransaktionen, der Zugangskontrolle oder der Signatur von rechtlich bindenden Dokumenten. Zweitens befinden sich tragbare Datenträger, während das Verfahren ausgeführt wird, typischerweise im Besitz des Angreifers, so daß dieser alle Zugriffs- und Analysemöglichkeiten zur Ausspähung der geheimzuhaltenden Werte hat

Die Erfindung hat daher die Aufgabe, ein ausspahungsgesichertes Verfahren zur modularen Inversion bereitzustellen, das sich für sicherheitskritische Anwendungen wie z.B. kryptographische Berechnungen auf einem tragbaren Datenträger eignet. Insbesondere soll das Verfahren eine möglichst geringe Anfälligkeit für Angriffe durch Laufzeitanalyse oder Stromverbrauchsanalyse aufweisen.

Rrfindungsgemäß wird diese Aufgabe ganz oder zum Teil gelöst durch ein Verfahren mit den Merkmalen des Anspruchs 1, ein Computerprogrammprodukt gemäß Anspruch 2 und einen tragbaren Datenträger gemäß Anspruch 3.

Die Erfindung geht von der Grundidee aus, die Eingabedaten (nämlich den Wert *a* und den Modul n) nicht unmittelbar einem Verfahren zur modularen Inversion zuzuführen, sondern sie zunächst in geeigneter Weise in einen Hilfswert β und ein Hilfsmodul δ zu transformieren. Mindestens ein die Transformation beeinflussender Maslderungsparameter r wird dabei z.B. zufällig oder quasi-zufällig oder auf andere geeignete Weise so gewählt, daß sich selbst bei Kenntnis des Hilfswertes β und/oder des Hilfsmoduls δ keine hinreichenden Informationen über die geheimzuhaltenden Eingabedaten bzw. den geheimzuhaltenden Teil der Eingabedaten ableiten lassen.

Aus dem Hilfswert β und dem Hilfsmodul δ wird dann nach einem an sich bekannten Verfahren zur modularen Inversion ein Hilfsinverses β' bestimmt. Auch wenn dieses Inversionsverfahren möglicherweise einer der eingangs genannten Angriffsmöglichkeiten zugänglich ist, bringt eine Ausspähung des Hilfswertes β und/ oder des Hilfsmoduls δ und/oder des Hilfsinversen δ' dem Angreifer keinen Gewinn, weil diese die Ausgangsdaten zumindest zum Teil in maskierter Form, nämlich in Abhängigkeit von mindestens einen Maskierungsparameter *r*, enthalten.

Schließlich wird die anfängliche Transformation im Ergebnis rückgangig gemacht, indem das modulare Inverse *b* in Abhängigkeit von dem Hilfs-inversen β' berechnet wird. In diese Rück-Transformation fließen auch der mindestens eine Maskierungsparameter *r* und mindestens einer der Werte β und δ sowie gegebenenfalls weitere Werte ein.

Durch die erfindungsgemäß vorgesehene Hin- und Rücktransformation werden daher die geheimzuhaltenden Werte vor dem kritischen Berechnungsabschnitt verschleiert oder maskiert. Diese Verschleierung oder Maskierung wird nach der ausspähungsgefährdeten Berechnung des modularen Inversen wieder rückgängig gemacht, um das gewünschte Ergebnis zu erhalten. Dabei sind die der Ver- und Entschleierung dienenden Berechnungen gegen die hier zu berücksichtigenden Angriffsmöglichkeiten abgesichert. Das Gesamtverfahren ist damit ausspähungsgesichert und auch für kritische Anwendungen geeignet. Es wird ein gewisser Mehraufwand für die der Verund Entschleierung dienenden Berechnungen benötigt, der jedoch insgesamt nicht besonders ins Gewicht fällt.

Der Maskierungsparameter *r* wird bei jeder einzelnen Ausführung des Verfahrens erneut zufällig gewählt, indem beispielsweise ein geeigneter Zufallszahlenalgorithmus aufgerufen wird. In Ausführungsalternativen kann dagegen der Maskierungsparameter *r* für mehrere Berechnungsvorgänge konstant bleiben oder durch einen einfachen Algorithmus, der keine strengen Anforderungen hinsichtlich der Zufallsverteilung erfüllt, fortgeschaltet werden. Auch hierdurch kann schon eine hinreichende Ausspähungssicherheit erzielt werden. Der Maskierungsparameter *r* weist ungefähr dieselbe Größenordnung wie der Modul *n* auf. Darunter kann z.B. zu verstehen sein, daß sich die Werte *r* und *n* in ihrer Länge als Binär- oder Dezimalzahl höchstens um 20 Prozent oder höchstens um die Hälfte unterscheiden.

Neben dem Maskierungsparameter *r* ist noch mindestens ein Hilfsparameter s, vorgesehen, der ebenfalls zur Berechnung der maskierten Werte β und/oder δ herangezogen wird, der aber bei der späteren Bestimmung des modularen Inversen nicht mehr unmittelbar verwertet wird. Mittelbar fließt der Hilfsparameter *s* bei dieser Berechnung jedoch ein, weil er in der Regel zumindest einen der Werte β, β' und δ beeinflußt. Die oben erwähnten bevorzugten Eigenschaften des Maskierungsparameters *r* gelten entsprechend auch für den Hilfsparameter *s*.

Erfindungsgemäß ist vorgesehen, den Hilfswert β und den Hilfsmodul δ gemäß den Gleichungen *ra* = *αn* + β und *sn* = *ya* + δ oder gemäß den Gleichungen *ra* = *αn* + δ und *sn* = *γa* + β zu bestimmen. Wenn zusätzlich die Ungleichung 0 ≤ β < *n* oder 0 ≤ δ < *n* beziehungsweise die Ungleichung 0 ≤ δ < *a* oder 0 ≤ β < *a* erfüllt ist, entspricht dies je einer Berechnung einer Division mit Rest.

Das erfindungsgemäß Computerprogrammprodukt weist Programmbefehle auf, um das erfindungsgemäße Verfahren zu implementieren. Ein derartiges Computerprogrammprodukt kann beispielsweise ein Halbleiterspeicher oder eine Diskette oder eine CD-ROM sein, auf denen ein erfindungsgemäßes Berechnungsprogramm gespeichert ist. Insbesondere kann ein derartiges Computerprogrammprodukt zur Verwendung bei der Herstellung von Chipkarten vorgesehen sein.

In bevorzugten Ausgestaltungen sind das Computerprogrammprodukt und/oder der tragbare Datenträger mit Merkmalen weitergebildet, die den oben beschriebenen und/oder den in den abhängigen Verfahrensansprüchen genannten Merkmalen entsprechen.

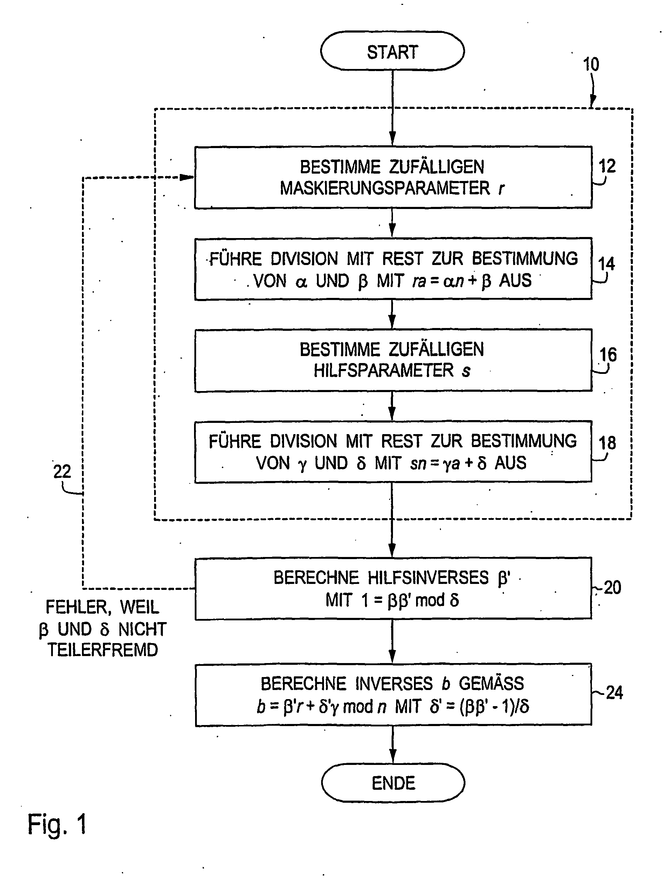

Weitere Merkmale, Vorteile und Aufgaben der Erfindung gehen aus der folgenden genauen Beschreibung eines Ausführungsbeispiels und mehrerer Ausführungsalternativen hervor. Es wird auf die schematischen Zeichnungen verwiesen, in denen die (einzige) Fig.1 ein Flußdiagramm des Verfahrensablaufs bei einem Ausführungsbeispiel der Erfindung zeigt

Das in Fig.1 schematisch dargestellte Verfahren ist dazu vorgesehen, von einem Prozessor eines tragbaren Datenträgers, insbesondere einer Chipkarte (*smart card*) oder eines Chipmoduls, ausgeführt zu werden. Das Verfahren ist dazu in Form von Programmbefehlen für diesen Prozessor implementiert, die in einem ROM oder EEPROM des Datenträgers gespeichert sind. Das Verfahren wird bei der Schlüsselpaarbestimmung für ein RSA-Codierverfahren oder ein RSA-Signaturverfahren verwendet.

Das Verfahren geht von einem vorgegebenen Wert *a* und einem Modul *n* aus und berechnet daraus das modulare Inverse *b*, also denjenigen Wert 0 ≤ *b* < *n*, für den 1 = *ab* mod *n* gilt. In einem ersten Schritt 10 werden dazu der Wert *a* und der Modul *n* transformiert um einen Hilfswert β und ein Hilfsmodul δ zu bestimmen. Im vorliegenden Ausführungsbeispiel weist der Schritt 10 vier Teilschritte 12, 14, 16, 18 auf, die in Ausführungsalternativen auch in anderer Reihenfolge oder ganz oder teilweise ineinander verzahnt ausgeführt werden können.

Im ersten Teilschritt 12 wird ein zufälliger Maskierungsparameter *r* bestimmt, der ungefähr dieselbe Größenordnung wie der Wert *n* hat Es wird dazu ein an sich bekannter, durch Software implementierter Zufallszahlen-Generator eingesetzt. Das Produkt des Maskierungsparameters *r* und des Wertes *a* wird in Teilschritt 14 ganzzahlig mit Rest durch den Modul *n* geteilt Der ganzzahlige Quotient α wird nicht weiter benötigt, während der Rest β als Hilfswert für das weitere Verfahren dient

Die Teilschritte 16 und 18 entsprechen den gerade beschriebenen Teilschritten 12 und 14. In Teilschritt 16 wird ein zufälliger Hilfsparameter *s* bestimmt, und in Teilschritt 18 wird das Produkt des Hilfsparameters *s* mit dem Modul *n* durch den Wert *a* dividiert Sowohl der ganzzahlige Quotient γ als auch der Rest δ werden in den folgenden Schritten benötigt; der Rest δ wird hierbei auch als Hilfsmodul δ bezeichnet

In Schritt 20 wird nach einem an sich bekannten Verfahren zur modularen Inversion, beispielsweise nach dem erweiterten Euklidischen Algorithmus oder dem Verfahren von Stein, ein Hilfsinverses β' des Hilfswertes β zum Hüfsmodul δ berechnet Mit anderen Worten hat der Wert β' die Eigenschaft 1 = ββ' mod δ.

Es kann vorkommen, daß die Berechnung des Hilfsinversen β' fehlschlägt, weil die Werte β und δ nicht teilerfremd sind und daher kein Inverses β' von β existiert Wenn dieser Fall in Schritt 20 auftritt, wird ein Rücksprung 22 an den Anfang von Schritt 10 ausgelöst. Es werden dann neue Zufallswerte *r* und *s* gewählt. Die Wahrscheinlichkeit, daß ein derartiger Rücksprung erfolgt, beträgt ungefähr 40 %, falls *a* und *n* teilerfremd sind. Es ist daher unwahrscheinlich, daß übermäßig viele Rücksprünge 22 ausgeführt werden müssen. So beträgt beispielsweise die Wahrscheinlichkeit, daß mehr als vier neue Paare von Zufallszahlen *r* und s berechnet werden müssen, nur ungefähr ein Prozent

Falls *a* und *n* nicht teilerfremd sind, wird der Rücksprung 22 stets ausgeführt, so daß das in Fig.1 gezeigte Verfahren nicht terminieren würde. Soll dieses Verfahren daher in einem Kontext eingesetzt werden, bei dem die Teilerfremdheit von *a* und *n* nicht von vorneherein feststeht, so ist die Verwendung eines Rücksprungzählers vorgesehen. Der Rücksprungzähler überwacht die Anzahl von Rücksprüngen 22, die bei einem Verfahrensdurchlauf auftreten. Bei Überschreitung einer vorgegebenen Maximalzahl von Rücksprüngen 22 wird das Verfahren von Fig.1 abgebrochen. Eine weitere Voraussetzung für den korrekten Verfahrensablauf ist der Ausschluß der (praktisch uninteressanten) Trivialfälle *a* = 1 und *n* = 1, da in diesen Fällen das Verfahren immer fehlschlägt.

Nach der Bestimmung des Hilfsinversen β' in Schritt 20 wird in Schritt 24 das Inverse *b* berechnet, indem zunächst eine Berechnung eines Zwischenwerts δ' = (ββ' -1)/δ und dann die abschließende Berechnung *b* = β'*r* + δ'γ mod *n* durchgeführt wird. Der Wert *b* ist das gesuchte Inverse, das nun der kryptographischen Anwendung zur Verfügung steht

Die Schritte 10 und 24 lassen sich gegen die eingangs beschriebenen Angriffe durch Laufzeitanalyse und Stromverbrauchsanalyse gut absichern, weil für die dort vorgenommenen Berechnungen Algorithmen zur Verfügung stehen, die wenig Angriffsmöglichkeiten bieten. Die Inversenberechnung in Schritt 20 ist zwar ausspähungsgefährdet, aber ein Angreifer könnte durch Analyse dieses Schritts allenfalls Kenntnis über den Hilfswert β und/ oder der Hilfsmodul δ erhalten. Diese Werte sind in Schritt 10 gegenüber den geheimzuhaltenden Eingabewerten *a* und *n* maskiert worden, da der zufällige Maskierungsparameter *r* und der zufällige Hilfsparameter *s* in die Berechnung von β und δ eingeflossen sind. Eine mögliche Kenntnis der Werte β und δ läßt daher für einen Angreifer keine sicherheitsschädlichen Rücksclülsse auf die Eingangswerte *a* und *n* zu.

In alternativen Ausgestaltungen des Verfahrens von Fig. 1 sind in den Teilschritten 14 und 18 die Rollen der Werte β und δ vertauscht. In diesem Fall wird in Schritt 24 statt der Gleichung *b* = β'*r* + δ'y mod *n* die Gleichung *b* = -(δ'*r* + β'γ) mod *n* verwendet.

## Patentansprüche

1. Verfahren zum ausspähungsgeschützten Bestimmen des modularen Inversen *b* eines Wertes *a* zum Modul *n* in einer kryptographischen Anwendung, bei der es sich um eine Schlüsselpaarbestimmung bei einem RSA-Codierverfahren oder einem RSA-Signaturverfahren handelt, wobei das Verfahren auf einem Prozessor ausgeführt wird und die folgenden Schritte umfasst:
a) Bestimmen (10) eines Hilfswertes β und eines dazu teilerfremden Hilfsmoduls δ zumindest in Abhängigkeit von dem Wert *a*, dem Modul *n* sowie mindestens einem Maskierungsparameter *r* und mindestens einem Hilfsparameter s derart, daß sich der Hilfswert β von dem Wert *a* und/ oder der Hilfsmodul δ von dem Modul *n* unterscheiden/unterscheidet, wobei der mindestens eine Maskierungsparameter *r* zufällig gewählt wird und/ oder die Größenordnung des Moduls *n* aufweist und wobei der mindestens eine Hilfsparameter *s* zufällig gewählt wird und/ oder die Größenordnung des Wertes *a* aufweist,
b) Bestimmen (20) eines Hilfsinversen β' als modulares Inverses des Hilfswertes β zum Hilfsmodul δ, und
c) Bestimmen (24) des modularen Inversen b zumindest in Abhängigkeit von den folgenden Werten:
- dem Hilfsinversen β',
- dem mindestens einen Maskierungsparameter r, und
- dem Hilfswert β und/ oder dem Hilfsmodul δ,
wobei der Hilfsparameter *s* nicht unmittelbar in die Bestimmung des modularen Inversen *b* einfließt,
wobei in Schritt a) der Hilfswert β und der Hilfsmodul δ gemäß den Gleichungen *ra* = *αn* + β und *sn* = *γa* + δ mit 0 ≤ β < *n* und 0 ≤ δ < *a* bestimmt werden und in Schritt c) das modulare Inverse *b* durch Auswerten der Gleichung *b* = β'*r* + δ'γ mod *n* mit δ' = (ββ' -1)/δ bestimmt wird oder
wobei in Schritt a) der Hilfswert β und der Hilfsmodul δ gemäß den Gleichungen *ra* = *αn* + δ und *sn* = *γa* + β mit 0 ≤ δ < *n* und 0 ≤ β < *a* bestimmt werden und in Schritt c) das modulare Inverse *b* durch Auswerten der Gleichung *b* = -(δ'*r* + β'γ) mod *n* mit δ' = (ββ' -1)/δ bestimmt wird.

2. Computerprogrammprodukt, das Programmbefehle aufweist, um einen Prozessor zu veranlassen, ein Verfahren mit den Merkmalen von Anspruch 1 auszuführen.

3. Tragbarer Datenträger, insbesondere Chipkarte oder Chipmodul, der zur Ausführung eines Verfahrens mit den Merkmalen von Anspruch 1 eingerichtet ist.

## Claims

1. A method for determining, in a way that is protected against spying, the modular inverse *b* of a value *a* with a module *n* in a cryptographic application, which is a key pair determination in an RSA encoding method or an RSA signature method, wherein the method is executed by a processor and comprises the following steps:
a) determining (10) an auxiliary value β and an auxiliary module δ, which are relatively prime to each other, at least depending on the value *a*, the module *n* and at least one masking parameter *r* and at least one auxiliary parameter *s* in such a way that the auxiliary value β differs from the value *a* and/or the auxiliary module δ differs from the module *n*, wherein the at least one masking parameter *r* is randomly chosen and/ or has the same order of magnitude as the module *n*, and wherein the at least one auxiliary parameter *s* is randomly chosen and/ or has the same order of magnitude as the value *a*,
b) determining (20) an auxiliary inverse β' as the modular inverse of the auxiliary value β in relation to the auxiliary module δ, and
c) determining (24) the modular inverse *b* at least depending on the following values:
- the auxiliary inverse β',
- the at least one masking parameter r, and
- the auxiliary value β and/or the auxiliary module δ,
wherein the auxiliary parameter *s* does not directly influence the determination of the modular inverse *b*,
wherein in step a) the auxiliary value β and the auxiliary module δ are determined according to the equations *ra* = α*n* + β and
*sn* = γ*a* + δ with 0 ≤ β < *n* and 0 ≤ δ < *a*, and wherein in step c) the modular inverse *b* is determined by evaluating the equation *b* = β'*r* + δ'y mod *n* with δ'= ((ββ'-1)/δ, or
wherein in step a) the auxiliary value β and the auxiliary module δ are determined according to the equations *ra* = *αn* + δ and
*sn* = γ*a* + β with 0 ≤ δ < *n* and 0 ≤ β < *a*, and wherein in step c) the modular inverse b is determined by evaluating the equation *b* = -(δ'*r* + β'γ) mod n with δ' = (ββ' -1)/δ.

2. A computer program product which has program commands to cause a processor to execute a method with the features of claim 1.

3. A portable data carrier, in particular a smart card or chip module, which is configured for executing a method with the features of claim 1.

## Revendications

1. Procédé de détermination protégée contre l'espionnage de l'inverse modulaire *b* d'une valeur *a* par rapport au module *n* dans une application cryptographique, pour laquelle il s'agit d'une détermination de paire de clés lors d'un procédé de codage RSA ou d'un procédé de signature RSA, dans lequel le procédé est réalisé sur un processeur et comprend les étapes suivantes :
a) détermination (10) d'une valeur auxiliaire β et d'un module auxiliaire δ premier à celle-ci au moins en fonction de la valeur *a*, du module *n* ainsi que d'au moins un paramètre de masquage *r* et d'au moins un paramètre auxiliaire *s* de telle sorte que la valeur auxiliaire β se différencie de la valeur *a* et/ ou que le module auxiliaire δ se différencie du module *n*, dans lequel l'au moins un paramètre de masquage *r* est choisi au hasard et/ ou présente l'ordre de grandeur du module *n* et dans lequel l'au moins un paramètre auxiliaire s est choisi au hasard et/ ou présente l'ordre de grandeur de la valeur *a*,
b) détermination (20) d'un inverse auxiliaire β' en tant qu'inverse modulaire de la valeur auxiliaire β par rapport au module auxiliaire δ, et
c) détermination (24) de l'inverse modulaire *b* au moins en fonction des valeurs suivantes :
- l'inverse auxiliaire β',
- l'au moins un paramètre de masquage *r*, et
- la valeur auxiliaire β et/ ou le module auxiliaire δ,
dans lequel le paramètre auxiliaire s n'est pas directement intégré dans la détermination de l'inverse modulaire *b*,
dans lequel, à l'étape a), la valeur auxiliaire β et le module auxiliaire δ sont déterminés conformément aux équations ra = *αn* + β et
*sn* = γ*a* + δ avec 0 ≤ β < *n* et 0 ≤ δ < *a* et, à l'étape c), l'inverse modulaire *b* est déterminé par évaluation de l'équation *b* = β'*r* + δ'γ mod *n* avec δ' = (ββ' - 1) / δ ou
dans lequel, à l'étape a), la valeur auxiliaire β et le module auxiliaire δ sont déterminés conformément aux équations *ra* = *αn* + δ et *sn* = γ*a* + β avec 0 ≤ δ < *n* et 0 β < *a* et, à l'étape c), l'inverse modulaire b est déterminé par évaluation de l'équation *b* = -(δ'*r* + β'γ) mod n avec δ' = (ββ' -1)/δ.

2. Produit de programme informatique qui présente des commandes de programme pour pousser un processeur à réaliser un procédé avec les caractéristiques de la revendication 1.

3. Support de données portatif, notamment carte à puce ou module à puce, qui est configuré pour la réalisation d'un procédé avec les caractéristiques de la revendication 1.
